Europäisches Patentamt

European Patent Office

Office européen des brevets

(19)

(11) Veröffentlichungsnummer : **0 180 606**
B1

# (12) EUROPÄISCHE PATENTSCHRIFT

(45) Veröffentlichungstag der Patentschrift :
15.06.88

(21) Anmeldenummer : 85901957.2

(22) Anmeldetag : 07.05.85

(86) Internationale Anmeldenummer :
PCT/CH 85/00073

(87) Internationale Veröffentlichungsnummer :
WO/8505320 (05.12.85 Gazette 85/26)

(51) Int. Cl.⁴ : **B 30 B 1/26**, **F 16 C 3/28**

(54) VORRICHTUNG ZUR KRAFTÜBERSETZUNG UND VERFAHREN ZU DEREN BETRIEB.

(30) Priorität : 14.05.84 CH 2359/84

(43) Veröffentlichungstag der Anmeldung :
14.05.86 Patentblatt 86/20

(45) Bekanntmachung des Hinweises auf die Patenterteilung : 15.06.88 Patentblatt 88/24

(84) Benannte Vertragsstaaten :
AT BE CH DE FR GB IT LI

(56) Entgegenhaltungen :
EP-A- 0 119 358
FR-A- 1 124 269
FR-A- 2 473 657
US-A- 1 480 177
US-A- 2 106 945
US-A- 2 629 327
US-A- 3 359 825
US-A- 3 530 771

(73) Patentinhaber : BREGENZER, René
Waldparkstrasse 45
CH-8212 Neuhausen am Rheinfall (CH)

(72) Erfinder : BREGENZER, René
Waldparkstrasse 45
CH-8212 Neuhausen am Rheinfall (CH)

(74) Vertreter : Breiter, Heinz
Patentanwalt H. Breiter AG Wartstrasse 4 Postfach
1163
CH-8401 Winterthur (CH)

## Beschreibung

Die Erfindung bezieht sich auf eine Vorrichtung mit einem um eine Drehachse für die Kraftübersetzung schwenkbaren Hohlkörper, welcher einen starr verbundenen Lastarm aufweist, einem in der Länge als Achsenverschiebung zwischen Drehachse und Kraftachse einstellbaren Kraftarm, einem Zwischenstück und einem in Axialrichtung verschiebbaren Stössel zur Aufnahme der am Lastarm angreifenden, über die Kraftachse nach dem Hebelgesetz übersetzten Kraft, und auf ein Verfahren zum Betrieb der Vorrichtung.

Ueberall dort, wo grosse Kräfte auf kurzen Wegen erforderlich sind, ist eine Kraftübersetzung angebracht. Diese kann z. B. über Getriebe, über Zahnstange und Ritzel, über die mechanische Kraftübersetzung nach dem bekannten Hebelgesetz (Last × Lastarm = Kraft × Kraftarm) oder über Druckluft bzw. Hydraulikoel mit entsprechendem Zylinder-Flächenverhältnis erfolgen.

Die Kraftübersetzung nach dem Hebelgesetz hat beispielsweise im Pressenbau eine breite Anwendung gefunden, insbesondere bei Kniehebelpressen. Charakteristisch für all diese Anwendungen ist der erforderliche kurze Kraftweg von einigen Millimetern, z. B. beim Stanzen von Blech mit sehr hohem Kraftbedarf. Nach dem bekannten Hebelgesetz wird auf diese Aufgabe, grosse Kraftentfaltung bei kleinem Kraftarm, über eine kleine Last bei grossem Lastarm gelöst.

Bei bekannten Vorrichtungen sind zur Erreichung sehr kurzer Kraftwege mehrfach hintereinander geschaltete Kraftübersetzungen üblich. Bei weiter entwickelten Vorrichtungen ist der Kraftweg stufenweise veränderbar und so den unterschiedlichen Anforderungen an Kraftbedarf und Kraftweg einigermassen anpassbar.

Aus der US-A-2 629 327 ist eine Vorrichtung bekannt, welche die Kolbenbewegung einer Pumpe steuern kann. Ein einstellbarer Betätigungs- oder Steuermechanismus erlaubt die Einstellung des Hubs eines Kolbens, der mit einer gleichmässigen Schwenkbewegung des Kraftarms erzeugt wird. Die auf den Kolben ausgeübten Kräfte sind von der Stellung des Kraftarms abhängig. Wenn bei einer bestimmtem Schwenkbewegung des Kraftarms der Kolben einen grossen Weg zurückgelegt, ist die auf ihn ausgeübte Kraft klein, das gepumpte Volumen jedoch gross. Mit steigender ausgeübter Kraft sinkt der Weg des Kolbens und damit das Pumpvolumen. Die Drehachse 15 ist durchgehend ausgebildet. Die stets positive Exzentrität kann nicht auf einen Wert vermindert werden der unter der Summe der Radien der Drehachse 15 und der Kraftachse 29 liegt. Damit ist die maximal erzeugbare Kraft beschränkt, was jedoch bei einer Pumpe bedeutungslos ist.

Die gegeneinander arbeitenden Vorschubwalzen der US-A3 359 825 sind mit der Hauptpresse verbunden und sind für den Vorschub verantwortlich. Die Vorschubwalzen werden mittels einer Welle 10 über eine Einwegkupplung in Bewegung gesetzt. Die Regulierung des Vorschubs kann manuell grob eingestellt werden. Die Feinverstellung wird über die Exzentrität des Kurbelwellenarms erreicht, wobei im Innern der Frontplatte, im Ruhezustand oder während der Drehbewegung, ein Elektromotor einwirkt. Die Exzentrität kann nur einseitig eingestellt werden, ist also stets positiv.

Der Erfinder hat sich die Aufgabe gestellt, eine Vorrichtung zur Kraftübersetzung nach dem Hebelgesetz mit kontinuierlich variablem Uebersetzungsverhältnis, bei welcher sehr kleine Kraftwege mittels einer einzigen Kraftübersetzung einstellbar sind, und ein Verfahren zum Betrieb der Vorrichtung zu schaffen. Mit der Vorrichtung sollen mit geringer Last grosse Druck- und/oder Zugkräfte erzeugt werden können.

In bezug auf die Vorrichtung wird die Aufgabe dadurch gelöst, dass der Hohlkörper eine im Hohlraum unterbrochene Drehachse hat, in den Bereich der Unterbrechung ein U-förmiges Teil mit der Kraftachse eingeschoben und mit Hilfe eines Positionierungsmittels fixiert ist, wobei die Länge des Kraftarms auf beide Seiten der Drehachse durch verschiedene Positionierung des U-förmigen Teils variierbar ist, was frei einstellbare Druck- oder Zugkräfte mit einer Schwenkbewegung in derselben Richtung erlaubt.

Ein frei variierbares Verhältnis der Kraftübersetzung führt zu Lösungen, das dem entsprechenden Problem genau angepasst werden kann und entsprechend einen minimalen Energieaufwand erforderlich macht. Eine Kraftübersetzung in einem Schritt erlaubt den Einsatz von einfachen mechanischen Bestandteilen. Der Hohlkörper und das U-förmige Teil werden durch eine Stellschraube miteinander verbunden und so gegeneinander in Position gebracht, dass sowohl der gewünschte Kraftarm der Länge k gebildet als auch — bei festgelegtem Drehsinn — eine Stoss- oder Zugkraft erzeugt wird. Der Lastarm, welcher starr mit dem Hohlkörper verbunden ist, hat — entsprechend dem Abstand der Drehachse zum Lastangriff — die Länge 1.

Das Verhältnis der Kraftübersetzung entspricht dem Verhältnis des Lastarms 1 zum Kraftarm k. Bei koaxialer Anordnung der Dreh- und Kraftachse ist der Kraftarm k = 0, es kann also keine Kraft mehr entwickelt werden. Dagegen kann der Kraftarm sehr klein sein, beispielsweise 0,01 cm, wodurch ein sehr hohes Uebersetzungsverhältnis möglich ist. Derart hohe Kraftübersetzungsverhältnisse sind beispielsweise bei Klemm- und Pressvorrichtungen vorteilhaft.

In grossen Vorrichtungen kann der Kraftarm bis beispielsweise 20 cm messen.

Alle erfindungsgemässen Vorrichtungen werden jedoch vorteilhaft derart ausgestaltet, dass der Winkel zwischen der Verbindungsgeraden der Kraftachse und der Stösselachse einerseits und der Längsachse des Stössels andererseits höchstens 20° beträgt. Bei grösseren Winkeln wirkt sich die seitlich zur Längsachse des Stössels wirkende Kraftkomponente nachteilig aus.

Ist der Lastarm als Hebel ausgebildet, kann er mit einem ausziehbaren Teil ausgerüstet sein, wodurch die Gesamtlänge 1 des Lastarms in weiten Grenzen variiert werden kann. Damit kann neben dem Kraftarm k auch die Länge 1 des Lastarms beliebig verändert und dem zu lösenden Problem angepasst werden. Der Lastarm kann auch als Rad bzw. Radsegment ausgebildet sein, an welchen bekannte mechanische Mittel angreifen.

Mit verstellbaren Einrichtungen, insbesondere mindestens einem Anschlag, kann die Anfangs- und/oder Endstellung des Lastarms am gewünschten Ort eingestellt werden.

Der Kraftangriff am Lastarm kann in an sich bekannter Weise über manuell, hydraulisch, pneumatisch oder elektrisch angetriebene Mittel erfolgen, welche an sich bekannt sind.

Insbesondere kann der Lastarm auch durch menschlichen Kraftangriff geschwenkt werden, weil sehr grosse Uebersetzungsverhältnisse eingestellt werden können.

Die erfindungsgemässe Vorrichtung kann derart ausgestaltet sein, dass sie in bezug auf den Abstand vom Werkstück positionierbar ist. Dies erfolgt beispielsweise durch Stellschrauben oder mittels einer Hubspindel.

Ein erstes Verfahren zum Betrieb der Vorrichtung zeichnet sich dadurch aus, dass die Kraftachse zu Beginn ihrer Schwenkbewegung um die Drehachse im Bereich der weitesten Entfernung von der Längsachse des Stössels und am Ende ihrer Schwenkbewegung im Bereich der Längsachse des Stössels liegt, wodurch eine zunehmende Kraft entwickelt wird. Die Kraftentwicklung in Längsrichtung des Stössels ist also umso grösser, je näher die entlang eines Zylindermantels gleitende Kraftachse der Längsachse des Stössels ist. Eine derartige Kraftentfaltung kann z. B. beim Nieten oder Biegen erwünscht sein.

Ein weiteres Verfahren zum Betrieb der Vorrichtung zeichnet sich dadurch aus, dass die Kraftachse zu Beginn ihrer Schwenkbewegung um die Drehachse im Bereich der Längsachse des Stössels und am Ende ihrer Schwenkbewegung im Bereich der weitesten Entfernung von der Längsachse des Stössels liegt, wodurch eine abnehmende Kraft entwickelt wird. Die Kraftentfaltung in Längsrichtung des Stössels nimmt also mit zunehmendem Abstand der Kraftachse von der Längsachse des Stössels ab. Eine derartige Kraftentfaltung kann beispielsweise bei Stanzwerkzeugen günstig sein.

Schliesslich zeichnet sich ein Verfahren zum Betrieb der Vorrichtung dadurch aus, dass die Kraftachse im Bereich der weitesten Entfernung von der Längsachse des Stössels, vorzugsweise in einem Winkelbereich von 60-120° zu dieser, geschwenkt wird, wodurch eine im wesentlichen gleichbleibende Kraft entwickelt wird. Die über den Stössel auf das Werkstück einwirkende Kraft verändert sich bei gleichmässiger Belastung des Lastarms nur unbedeutend, weil die Kraftachse nicht in den Bereich der Längsachse des Stössels geführt wird. Dies kann beispielsweise bei Klemmvorrichtungen vorteilhaft sein.

Je nach Richtung des Kraftangriffs am Lastarm führt der Stössel bei gegebenem Kraftarm k eine Bewegung in Richtung der Drehachse (Zugbewegung) oder von der Drehachse weg (Stossbewegung) aus.

Die erfindungsgemässe Vorrichtung und die Verfahren zu deren Betrieb sind zu mannigfaltiger Ver- bzw. Anwendung geeignet :
- Pressvorrichtungen, z. B. Stanzen, Prägen, Biegen, Nieten, Tiefziehen ;
- Klemmvorrichtungen ;
- Biegevorrichtungen ;
- Ziehvorrichtungen.

Die fertigen, mit der erfindungsgemässen Vorrichtung ausgerüsteten Maschinen haben die üblichen, hier deshalb nicht näher erläuterten Ausrüstungen, wie beispielsweise Rückfedern, Niederhalter, Zu- und Wegtransportvorrichtungen für die Werkstücke und selbstverständlich ein Gestell.

Diese Maschinen können neu gebaut oder bestehende Maschinen können umgerüstet werden.

Durch stufenlose Einstellung von Last- und Kraftarm und die Positionierungsvorrichtungen können einerseits optimale Verhältnisse für die Kraftübersetzung in einem weiten Variationsbereich erreicht, in der Praxis zwischen 10 und 10 000, und andererseits unnötige Leerwege der Werkzeuge vermieden werden.

Beispiel 1

Die Drehachse der Kraftübersetzung einer 5 000 N — Presse wird unterbrochen, die auf einem U-förmigen Teil montierte Achse des Kraftarmes dazwischen geschoben und mit einer Stellschraube fixiert. Dadurch wird eine kleine Exzentrizität zwischen Drehachse und Kraftachse, deren Abstand den Kraftarm bildet, möglich. Der Lastarm der Presse ist 30 cm lang, der Kraftarm ist nach der Umrüstung zwischen 3 und 0,3 cm variierbar, wodurch ein Uebersetzungsverhältnis von 10-100 entsteht. Versuche haben gezeigt, dass 1,5 mm dicke Aluminiumbleche für das Stanzen eines Langloches 4 500 N Presskraft erfordern. Bei einem mit dieser umgerüsteten Presse möglichen Uebersetzungsverhältnis von 100 ist eine Last von ca. 45 N erforderlich, was auch von Hand problemlos aufgebracht werden kann.

Beispiel 2

Bei einer weiteren Presse mit erfindungsgemäss unterbrochener Drehachse der Kraftübertragung und eingeschobener Kraftachse ist der Lastarm zwischen 40 und 90 cm Länge veränderbar. Bei auf Maximallänge eingestelltem Lastarm und einem auf 4,5 mm eingestelltem Kraftarm ist das Uebersetzungsverhältnis 200. Zur Prägung einer Sicke in ein Stahlblech ist eine benötigte Presskraft von 60 000 N festgestellt worden. Es ist also eine Last von ca. 300 N erforderlich, was von Hand gerade noch aufgebracht werden kann.

Die Erfindung wird in der Zeichnung beispielsweise weiter erläutert. Es zeigen schematisch :

- Fig. 1 eine perspektivische Ansicht einer erfindungsgemässen Vorrichtung zur Kraftübersetzung

- Fig. 2 einen Vertikalschnitt durch Fig. 1, und

- Fig. 3-5 verschiedene stilisierte Schwenkbereiche des Lastarms.

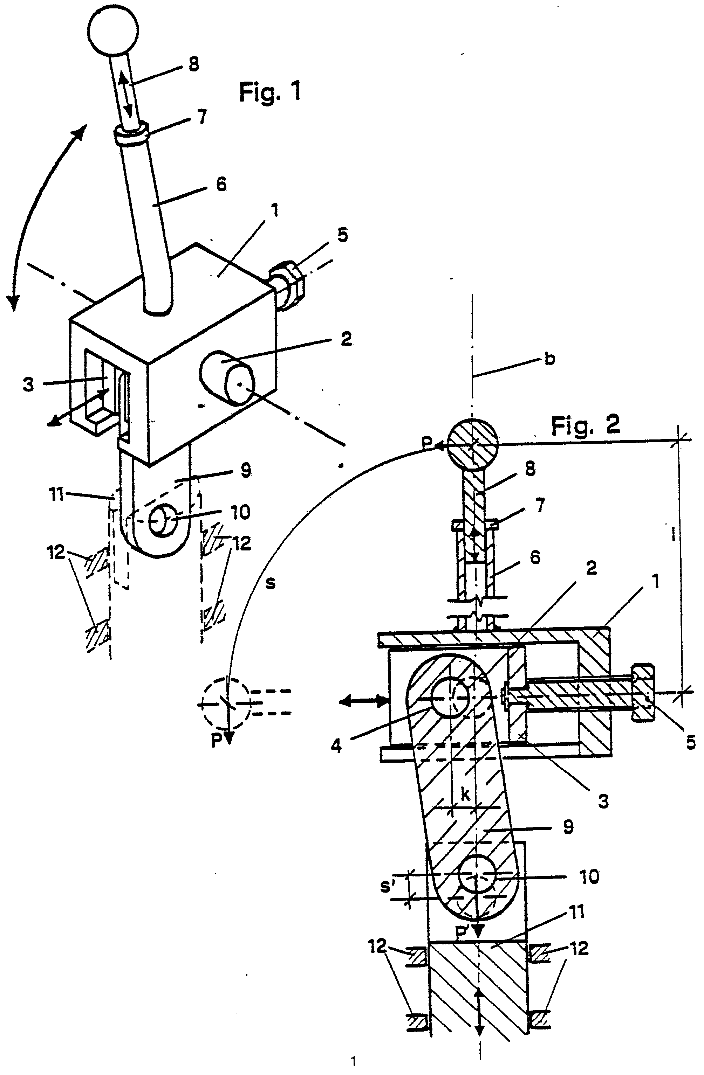

Eine Vorrichtung zur Kraftübersetzung mit kontinuierlich variierbarem Uebersetzungsverhältnis besteht nach den Fig. 1 und 2 aus einem Hohlkörper 1 sowie einer unterbrochenen Drehachse 2 für die Kraftübersetzung. Im Bereich der unterbrochenen Drehachse wird ein U-förmiges Teil 3 eingeschoben, welches die Kraftachse 4 enthält, und mittels eines Positionierungsmittels, hier als Stellschraube 5 ausgebildet, fixiert wird. Als Positionierungsmittel sind jedoch z. B. auch zwei Keile (nicht dargestellt) geeignet. Der Kraftarm der Länge k wird zwischen der unterbrochenen Drehachse 2 und der Kraftachse 4 gebildet. Der Lastarm 6 ist starr mit dem Hohlkörper 1 verbunden und enthält eine ausziehbare Verlängerung 8, welche mittels eines Stellringes 7 miteinander fixiert werden. Aus dem Lastarm der Länge 1 und einem Kraftarm der Länge k kann das Uebersetzungsverhältnis ü mit ü = l/k berechnet werden. Greift eine Kraft P am Lastarm an, so kann über ein Zwischenstück 9 die Kraft P' an der Stösselachse 10 abgetragen werden. Die Kraft P' wirkt auf einen Stössel 11 mit Führungen 12. Dabei gilt :

$$P' \cong P \times l/k$$

Die Stösselachse 10, bzw. der Stössel 11, beschreiben dabei in Richtung der Längsachse des Stössels einen Weg s' von

$$s' \cong s \times k/l$$

Ein wesentlicher Vorteil der in Fig. 1 und 2 dargestellten Vorrichtung ist die einfache Abstimmung des Uebersetzungsverhältnisses auf ein bestehendes Problem oder aber die Minimierung der am Lastarm angreifenden Kraft P bei vorgegebenem Weg s'.

Eine Ziehbewegung kann — gemäss Fig. 2. — erhalten werden, wenn der Lastarm über die gestrichelt eingezeichnete horizontale Lage hinaus geschwenkt wird. Ebenfalls eine Ziehbewegung würde erhalten, wenn

- der Lastarm gemäss Fig. 2 im Uhrzeigersinn geschwenkt würde, oder

- der Kraftarm k in Richtung der Stellschraube 5 ausgebildet wäre (Schwenkbewegung im Gegenuhrzeigersinn gemäss Fig. 2).

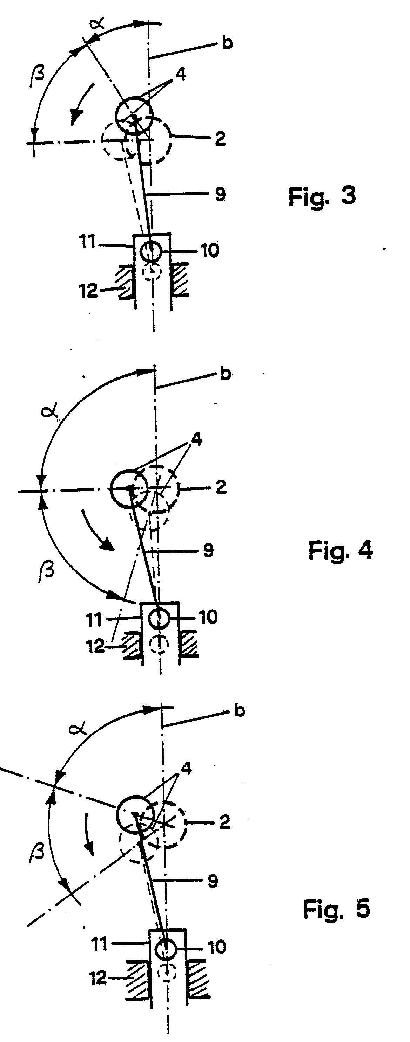

In den Fig. 3-5 wird die Schwenkbewegung des Lasthebels während der Arbeitsphase, bestehend aus dem Positionieren und der eigentlichen Arbeitsbewegung, mit β bezeichnet. Dieser Schwenkbereich β wird durch zwei nicht dargestellte Anschläge begrenzt.

Der Ausgangsdrehwinkel α, d. h. der Winkel zwischen der Längsachse b des Stössels und dem Lastarm entscheidet bei gleicher Lage der Kraftachse über die Art der Kraftentfaltung.

Fig. 3 zeigt eine Schwenkbewegung β mit abnehmender Kraftentfaltung, Fig. 4 eine Schwenkbewegung β mit zunehmender Kraftentfaltung, und Fig. 5 eine Schwenkbewegung β mit ungefähr gleichbleibender Kraftentfaltung.

**Patentansprüche**

1. Vorrichtung mit einem um eine Drehachse (2) für die Kraftübersetzung schwenkbaren Hohlkörper (1), welcher einen starr verbundenen Lastarm (6) aufweist, einem in der Länge als Achsenverschiebung zwischen Drehachse und Kraftachse (4) einstellbaren Kraftarm, einem Zwischenstück (9) und einem in Axialrichtung verschiebbaren Stössel (11) zur Aufnahme der am Lastarm (6) angreifenden, über die Kraftachse nach dem Hebelgesetz übersetzten Kraft, dadurch gekennzeichnet, dass der Hohlkörper (1) eine im Hohlraum unterbrochene Drehachse (2) hat, in den Bereich der Unterbrechung ein U-förmiges Teil (3) mit der Kraftachse (4) eingeschoben und mit Hilfe eines Positionierungsmittels (5) fixiert ist, wobei die Länge (k) des Kraftarmes auf beiden Seiten der Drehachse (2) durch verschiedene Positionierung des U-förmigen Teils (3) variierbar ist, was frei einstellbare Druck- oder Zugkräfte mit einer Schwenkbewegung in derselben Richtung erlaubt.

2. Vorrichtung nach Anspruch 1, dadurch gekennzeichnet, dass die Länge (k) des Kraftarmes zwischen 0,01 und 20 cm variierbar ist, wobei der Winkel zwischen der Verbindungsgeraden der Kraftachse (4) und der Stösselachse (10) und der Längsachse (b) des Stössels (11) vorzugsweise höchstens 20° beträgt.

3. Vorrichtung nach Anspruch 1 oder 2, dadurch gekennzeichnet, dass der Lastarm (6) mit einem ausziehbaren Teil (8) und einer Arretierung, vorzugsweise einem Stellring (7), versehen ist, und so die Gesamtlänge (1) des Lastarms (6) bildet.

4. Vorrichtung nach Anspruch 3, dadurch gekennzeichnet, dass der Lastarm als Rad bzw. Radsegment vom Radius (1) ausgebildet ist.

5. Vorrichtung nach einem der Ansprüche 1-4, dadurch gekennzeichnet, dass die Anfangs- und/oder Endstellung der Schwenkbewegung des Lastarms (6) mittels mindestens eines verschiebbaren Anschlags einstellbar ist.

6. Vorrichtung nach einem der Ansprüche 1-5, dadurch gekennzeichnet, dass der Kraftangriff am Lastarm (6) über manuell, hydraulisch, pneumatisch oder elektrisch angetriebene Mittel erfolgt.

7. Vorrichtung nach einem der Ansprüche 1-6, dadurch gekennzeichnet, dass sie in bezug auf den Abstand vom Werkstück positionierbar ist.

8. Verfahren zum Betrieb der Vorrichtung nach einem der Ansprüche 1-7, dadurch gekennzeichnet, dass die Kraftachse (4) zu Beginn ihrer Schwenkbewegung um die Drehachse (2) im Bereich der weitesten Entfernung von der Längsachse (b) des Stössels (11) und am Ende ihrer Schwenkbewegung im Bereich der Längsachse (b) des Stössels (11) liegt, wodurch mittels einer Schwenkbewegung in derselben Richtung eine zunehmende Druck- oder Zugkraft entwickelt wird.

9. Verfahren zum Betrieb der Vorrichtung nach einem der Ansprüche 1-7, dadurch gekennzeichnet, dass die Kraftachse (4) zu Beginn ihrer Schwenkbewegung um die Drehachse (2) im Bereich der Längsachse (b) des Stössels (11) und am Ende ihrer Schwenkbewegung im Bereich der weitesten Entfernung von der Längsachse (b) des Stössels (11) liegt, wodurch mittels einer Schwenkbewegung in derselben Richtung eine abnehmende Druck- oder Zugkraft entwickelt wird.

10. Verfahren zum Betrieb der Vorrichtung nach einem der Ansprüche 1-7, dadurch gekennzeichnet, dass die Kraftachse (4) im Bereich der weitesten Entfernung von der Längsachse (b) des Stössels (11), vorzugsweise in einem Winkelbereich von 60-120° zu dieser, geschwenkt wird, wodurch mittels einer Schwenkbewegung in derselben Richtung eine im wesentlichen gleichbleibende Druck- oder Zugkraft entwickelt wird.

## Claims

1. Force multiplier device with a hollow body (1) being pivotably mounted on an axis of rotation (2), having a rigidly attached loading lever (6), the device further comprising a force transmission lever adjustable concerning its length, in the form of a displacement of the axis of rotation with respect to the force transmission axis (4), an intermediate piece (9) and a ram (11) movable in axial direction for the absorption of the force multiplied in accordance with the lever principle acting via the force transmission lever at the loading lever, in which the hollow body (1) has an axis of rotation (2) interrupted in the hollow body (1), a U-shaped part (3) with the force transmission axis (4) is inserted into the region of the free space and fixed in place there with the aid of positioning means (5), the length (k) of the force transmission lever being variable on both sides of the axis of rotation (2) by various positioning of the U-shaped piece (3), which features freely adjustable forces of pressure or traction with one rotational movement in the same direction.

2. Device according to claim 1, in which the length (k) of the force transmission lever can be varied between 0.01 and 20 cm, whereby the angle between the line connecting the force transmission axis (4) and the ram axis (10) and the longitudinal axis (b) of the ram (11) is advantageously at most 20°.

3. Device according to claim 1 or 2, in which the loading lever (6) is provided with an extendable extension piece (8) and means of securing the said piece (8) preferably a setting ring (7) and with this extension piece (8) forms the overall length (1) of the loading lever (6).

4. Device according to claim 3, in which the loading lever is designed as a wheel or segment of a wheel of radius (1).

5. Device according to one of the claims 1-4, in which the initial and/or end position of the rotational movement of the loading arm (6) is adjustable by means of at least one moveable stop.

6. Device according to one of the claims 1-5, in which the application of the load to the loading lever (6) takes place via manually operated, hydraulic, pneumatic or electrically powered means.

7. Device according to one of the claims 1-6, in which the position of the said device with respect to the workpiece is variable.

8. Method for operation of the device according to one of the claims 1-7, in which the force transmission axis (4) at the start of its rotational movement around the axis of rotation (2) is in the region furthest removed from the longitudinal axis (b) of the ram (11) and at the end of its rotational movement lies in the region of the longitudinal axis (b) of the ram (11) as a result of which an increasing force of pressure or traction is developed by one rotational movement in the same direction.

9. Method of operation of the device according to one of the claims 1-7, in which the force transmission axis (4) at the start of its rotational movement around the axis of rotation (2) is in the region of the longitudinal axis (b) of the ram (11) and at the end of its rotational movement is in the region furthest removed from the longitudinal axis (b) of the ram, as a result of which a decreasing force of pressure or traction is developed by one rotational movement in the same direction.

10. Method of operation of the device according to one of the claims 1-7, in which the force transmission axis (4) is rotated in the region furthest removed from the longitudinal axis (b) of the ram (11), preferably within a range of 60-120° to this, as a result of which an essentially constant force of pressure or traction is developed by one rotational movement in the same direction.

## Revendications

1. Dispositif multiplicateur de force d'un corps creux (1) pivotant autour d'un axe de rotation (2), corps creux pourvu d'un bras de la charge (6) relié rigidement, d'un bras de la puissance réglable par rapport à sa longueur en déplaçant l'axe de rotation et l'axe de la puissance (4), d'une pièce intercalaire (9) et d'un coulisseau (11) mobile dans la direction axiale pour l'absorption de la force multipliée selon le principe des leviers transmise au bras de la charge (6) par l'axe de la puissance, caractérisé en ce que le corps creux (1) a un axe de rotation (2) interrompu dans la cavité, un élément en forme d'U (3) avec l'axe de la puissance (4) est intercalé dans la partie interrompue et fixé à l'aide d'un moyen de positionnement (5), à l'occasion de quoi la longueur (k) du bras de la puissance est variable sur les deux côtés de l'axe de rotation par positions différentes de l'élément en forme d'U (3), ce qui permet des forces de pression et de traction réglable librement par un mouvement pivotant dans la même direction.

2. Dispositif selon la revendication 1, caractérisé en ce que la longueur (k) du bras de la puissance est variée entre 0,01 et 20 cm, à l'occasion de quoi l'angle entre la ligne droite de jonction de l'axe de la puissance (4) et l'axe du coulisseau (10) d'une part et de l'axe longitudinal (8) du coulisseau (11) d'autre part est préférablement de 20° au maximum.

3. Dispositif selon la revendication 1 ou 2, caractérisé en ce que le bras de la charge (6) est pourvu d'une pièce téléscopique (8) et d'un dispositif d'arrêt, de préférence d''une bague d'arrêt, ainsi représentant la longueur (1) totale du bras de la charge (6).

4. Dispositif selon la revendication 3, caractérisé en ce que le bras de la charge se présente sous forme d'une roue ou d'un segment de roue ayant un rayon (1).

5. Dispositif selon l'une des revendications 1-4, caractérisé en ce que la position initiale et/ou finale du mouvement pivotant du bras de la charge (6) est réglable par au moins un arrêt variable.

6. Dispositif selon l'une des revendications 1-5, caractérisé en ce que l''application de la puissance au bras de la charge (6) se fait par des moyens manuels, hydrauliques, pneumatiques ou électriques.

7. Dispositif selon l'une des revendications 1-6, caractérisé en ce qu'il est réglable par rapport à sa distance de la pièce à travailler.

8. Procédé pour la mise en œuvre du dispositif selon l'une des revendications 1-7, caractérisé en ce que l'axe de la puissance (4) se trouve au début de son mouvement pivotant autour de l'axe de rotation (2), dans le domaine écarté le plus loin de l'axe longitudinal (b) du coulisseau (11) et à la fin de son mouvement pivotant dans le domaine de l'axe longitudinal (b) du coulisseau (11), par quoi une puissance augmentante est produite par un mouvement pivotant dans la même direction.

9. Procédé pour la mise en œuvre du dispositif selon l'une des revendications 1-7, caractérisé en ce que l'axe de puissance (4) se trouve, au début de son mouvement pivotant autour de l'axe de rotation (2), dans le domaine de l'axe longitudinal (b) du coulisseau (11) et à la fin de son mouvement pivotant dans le domaine écarté le plus loin de l'axe longitudinal (b) du coulisseau (11), par quoi une puissance diminuante est produite par un mouvement pivotant dans la même direction.

10. Procédé pour la mise en œuvre du dispositif selon l'une des revendications 1-7, caractérisé en ce que l'axe de puissance (4) est pivoté dans le domaine écarté le plus loin de l'axe longitudinal (b) du coulisseau (11), de préférence dans un domaine d'angle de 60-120° par rapport à cet axe, par quoi une puissance constante pour l'essentiel est produite par un mouvement pivotant dans la même direction.

**0 180 606**

Fig. 1

Fig. 2

0 180 606

Fig. 3

Fig. 4

Fig. 5

2